# EUROPEAN PATENT APPLICATION

(11) **EP 4 465 428 A1**
(43) Date of publication of application: **20.11.2024**
(21) Application number: 22952513.4
(22) Date of filing: 29.07.2022
(51) Int. Cl.: H01M 50/244, H01M 50/249

(54) **BOX BODY OF BATTERY, AND BATTERY AND ELECTRIC DEVICE**

(71) Applicant: Contemporary Amperex Technology (Hong Kong) Limited, Central, Central And Western District (HK)
(72) Inventor: YAO, Pengcheng, Ningde, Fujian 352100 (CN); XUE, Danyue, Ningde, Fujian 352100 (CN); WANG, Peng, Ningde, Fujian 352100 (CN); CHEN, Xingdi, Ningde, Fujian 352100 (CN)
(74) Representative: Holt, Lucy Rose
(86) International application number: PCT/CN2022/109108
(87) International publication number: WO 2024/021066

(57) **Abstract**

A box body (2010) of a battery (2000), and the battery (2000) and an electric device. The box body (2010) comprises: a frame (100), in which a first opening is formed by means of enclosure; and a bearing plate (200), which is configured to connect to a battery cell (2020), wherein the bearing plate (200) covers the first opening, and comprises at least one reinforcing area (220) and at least one bearing area (210), the thickness of the reinforcing area (220) being greater than the thickness of the bearing area (210). By means of disposing the reinforcing area (220) on the bearing plate (200), the bearing capacity of the bearing plate (200) can be improved, so as to improve the local rigidity of the bearing plate (200), thereby improving the overall rigidity of the box body (2010), and thus improving the safety performance of the battery (2000).

## Description

### TECHNICAL FIELD

The present application relates to the technical field of batteries, and in particular to a casing body of a battery, a battery and an electricity-consuming apparatus.

### BACKGROUND

A battery cell is widely used in electronic devices, such as a mobile phone, a laptop computer, a battery car, an electric car, an electric airplane, an electric ship, an electric toy car, an electric toy ship, an electric toy airplane, electric tools and the like.

How to improve the safety of the battery cell is a research direction in the battery technology.

### SUMMARY

The present application provides a casing body of a battery, a battery and an electricity-consuming apparatus, which can improve the structural strength.

In a first aspect, the casing body of the battery is provided by embodiments of the present application. The casing body includes: an edge frame, enclosing and forming a first opening; and a carrying plate, configured to connect a battery cell. The carrying plate covers the first opening, the carrying plate includes at least one carrying region and at least one reinforcing region, and a thickness of the reinforcing region is larger than a thickness of the carrying region.

In the above technical solution, the reinforcing region is arranged on the carrying plate to increase the thickness of the reinforcing region on the carrying plate, so that it can improve the carrying capacity of the carrying plate, and improve the local rigidity of the carrying plate. Therefore, the overall rigidity of the casing body can be improved, and the safety performance of the battery can be improved.

In some embodiments, a plurality of reinforcing regions and a plurality of carrying regions are provided, the plurality of reinforcing regions and carrying regions are alternately distributed in a first direction, and the first direction intersects with a thickness direction of the carrying plate.

In the above technical solution, the carrying region and the reinforcing region can strengthen a weak region in the casing body during design in a targeted manner, so that arrangements of the reinforcing region and the carrying region can be more flexible.

In some embodiments, at least two of the plurality of reinforcing regions have different widths extending in the first direction.

In the above technical solution, when each reinforcing region is arranged, the reinforcing region can be arranged according to the different degrees of the weak region in the casing body in a targeted manner.

In some embodiments, a plurality of reinforcing regions and a plurality of carrying regions are provided, and an average thickness H1 of the plurality of reinforcing regions and an average thickness H2 of the plurality of carrying regions satisfy a relationship: 0 mm<H1-H2≤20 mm.

In the above technical solution, the greater the difference between the average thickness of the reinforcing region and the average thickness of the carrying region, the greater the overall weight of the reinforcing region, and the higher the material cost. The closer the difference between the average thickness of the reinforcing region and the average thickness of the carrying region, the smaller the overall rigidity of the casing body increases, and the smaller the carrying capacity of the carrying plate increases. In the technical solution, the average thickness of the reinforcing region and the average thickness of the carrying region are limited to 0 mm<H1-H2≤20 mm, so that the average thickness difference between the two regions should be reduced as much as possible under the premise of ensuring the rigidity of the casing body.

In some embodiments, a minimum thickness H3 of the carrying region satisfies a relationship: 0.2 mm≤H3≤20 mm.

In the above technical solution, the carrying region represents the fundamental carrying/bearing capacity of the carrying plate. The smaller the thickness of the carrying region, the worse the carrying capacity of the carrying plate, and the lower the overall rigidity of the casing body. The greater the thickness of the carrying region, the higher the material cost of the carrying plate, and the heavier the overall weight of the casing body. In the technical solution, the thickness of the carrying region can be limited to 0.2 mm≤H3≤20 mm, so as to balance the carrying capacity and material cost of the carrying plate.

In some embodiments, the minimum thickness H3 of the carrying region satisfies a relationship: 0.5 mm≤H3≤10 mm.

In some embodiments, an average thickness of the carrying plate is H, a weight of the battery is M, and H and M satisfy a relationship: 0.002 mm/kg≤H/M≤100 mm/kg.

In the above technical solution, when the value of H/M is too large, it will cause waste of weight and low energy density; when the value of H/M is too small, the structural strength cannot be satisfied, and the safety accident such as fire, explosion and the like will occur. In the technical solution, the relationship between the average thickness of the carrying plate and the weight of a battery core can be limited to 0.002 mm/kg≤H/M≤ 100 mm/kg, so as to balance the structural strength requirement of the carrying plate and the energy density requirement of the battery core.

In some embodiments, the average thickness of the carrying plate is H, and the weight of the battery is M, and H and M satisfy a relationship: 0.01 mm/kg≤H/M≤0.5 mm/kg.

In some embodiments, a thickness difference between the carrying region and the reinforcing region with a maximum thickness is h1, and h1 satisfies a relationship: 0 mm<h1 ≤ 100 mm; a thickness difference between the carrying region and the reinforcing region with a minimum thickness is h2, and h2 satisfies a relationship: 0 mm<h2≤10 mm.

In the above technical solution, the reinforcing region protrudes toward a side facing away from the battery cell. The greater the thickness difference between the reinforcing region and the carrying region, the more space the reinforcing region occupies at the side facing away from the battery cell, so that it is not conducive to the assembly of other portions. The smaller the thickness difference between the reinforcing region and the carrying region, the closer the carrying performance of the reinforcing region and the carrying region. If the thickness difference between the reinforcing region and the carrying region is too small, the carrying performance of the reinforcing region is similar to that of the carrying region, and the reinforcing effect cannot be reflected. In the technical solution, the maximum thickness difference can be limited to 0 mm<h1 ≤ 100 mm, and the minimum thickness difference can be limited to 0 mm<h2≤10 mm, so as to balance the space occupied by the carrying plate and the carrying performance.

In some embodiments, the reinforcing region and the carrying region are arranged to be fixedly connected with each other.

In the above technical solution, the reinforcing region and the carrying region are fixedly connected by means of welding, so as to improve the connection strength between the reinforcing region and the carrying region. Therefore, separation between the reinforcing region and the carrying region can be avoided, and reduce the possibility of sealing failure of the casing body.

In some embodiments, the reinforcing region and the carrying region are an integrally formed structure.

In the above technical solution, the reinforcing region and the carrying region adopt a structure formed integrally, so as to reduce the manufacturing cost.

In some embodiments, the carrying plate comprises a substrate and a laminating plate, the laminating plate is arranged to be stacked in different regions at a side of the substrate away from the battery cell to form the reinforcing region, and a region of the substrate not covered by the laminating plate forms the carrying region.

In the above technical solution, the carrying plate can be divided into the substrate and the laminating plate, so that it can reduce the manufacturing process; the laminating plate can be adapted to different carrying strengths, so as to reduce the need for the non-standard portions and further reducing the manufacturing cost.

In some embodiments, the substrate includes at least one concave portion, and the laminating plate is embedded in the concave portion to form the reinforcing region.

In the above technical solution, the substrate can form the concave portion according to the structure of peripheral portions, so as to improve the adaptability of the substrate and the peripheral portions. At the same time, the integrated outer surface can reduce the possibility of sealing failure caused by an external impact force on the carrying plate, and improve the reliability of the casing body of the battery.

In some embodiments, a material of the substrate is different from that of the laminating plate, a rigidity of the laminating plate is greater than a rigidity of the substrate, and a weight of the laminating plate per unit area is smaller than a weight of the substrate per unit area.

In the above technical solution, the laminating plate can be produced by the material with high stiffness and low weight, so that the weight of the reinforcing region can be reduced, can the overall weight of the carrying plate can be reduced.

In some embodiments, a first surface of the carrying region facing the battery cell and a second surface of the reinforcing region facing the battery cell are on the same plane.

In the above technical solution, the first surface and the second surface are placed on the same plane, so as to avoid the uneven phenomenon when the battery cell is mounted on the carrying plate, and avoid the phenomenon that the battery cell is subjected to the uneven force to cause the explosion of the battery cell.

In some embodiments, the casing body further includes a sealing member. The sealing member is arranged between the carrying plate and the casing body, and each of edge portions of each of the reinforcing region and the carrying region in a second direction can be abutted against the sealing member and connected to the casing body.

In the above technical solution, the sealing member can seal between the carrying plate and the casing body, so that it can prevent the foreign matter, the water vapor and the like from entering between the carrying plate and the casing body, and improve the service life of the battery cell.

In a second aspect, the embodiments of the present application provide a battery, including a battery cell and the casing body according to any one of embodiments in the first aspect. The casing body is configured to accommodate the battery cell.

In some embodiments, the battery further includes a heat-managing portion. The heat-managing portion is configured to adjust a temperature of the battery cell. An orthographic projection of a part of the heat-managing portion on the carrying plate at least partially overlaps with the reinforcing region in a thickness direction.

In a third aspect, the embodiments of the present application provide an electricity-consuming apparatus, including the battery according to any one of embodiments in the second aspect. The battery is configured to provide electrical power.

### BRIEF DESCRIPTION OF THE DRAWINGS

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without the inventive labor.
Fig. 1 shows a structural schematic view of a vehicle according to some embodiments of the present application;
Fig. 2 shows an exploded schematic view of a battery according to some embodiments of the present application;
Fig. 3 shows a structural schematic view of a casing body of a battery cell according to some embodiments of the present application;
Fig. 4 shows a structural schematic view of a carrying plate in a casing body of a battery cell according to some embodiments of the present application;
Fig. 5 shows a structural schematic cross-sectional view of at a line A-A in Fig. 4;
Fig. 6 shows a structural schematic cross-sectional view of another carrying plate in a casing body of a battery cell according to some embodiments of the present application; and
Fig. 7 shows a structural schematic cross-sectional view of another carrying plate in a casing body of a battery cell according to some embodiments of the present application.

In the drawings, the drawings are not drawn to actual scale.

In the drawings:
1000-vehicle; 2000-battery; 2010-casing body; 2020-battery cell; 2030-heat-managing portion; 3000-controller; 4000-motor;
100-edge frame;
200-carrying plate; 210-carrying region; 210a-first surface; 220-reinforcing region; 220a-second surface; 201-substrate; 201a-concave portion; 202-laminating plate;
X-first direction.

### DETAILED DESCRIPTION

In order to make the objects, technical solutions and advantages of the embodiments of the present application more clear, the technical solutions of the embodiments of the present application will be clearly and completely described below in conjunction with the drawings of the embodiments of the present application. It is apparent that the described embodiments are a part of the embodiments of the present application, and not all of them. Based on the described embodiments of the present application, all other embodiments obtained by those skilled in the art fall within the scope of the application.

Unless otherwise defined, technical terms or scientific terms used in the present disclosure should be interpreted according to common meanings thereof as commonly understood by those of ordinary skills in the art. The terms used in the description in the present application are only for the purpose of describing specific embodiments and are not intended to limit the present application. The terms "including" and "having" in the description and the claims of the present application and the above description of the drawings, and any variations thereof are intended to cover non-exclusive inclusions. The terms "first", "second", etc. in the description and the claims of the present application or the above-mentioned drawings are used to distinguish different objects, rather than to describe a specific order or a primary-secondary relationship.

The "embodiments" referred in the present application means that specific features, structures or characteristics described in conjunction with the embodiments may be included in at least one embodiment of the present application. This word appeared in various places in the description does not necessarily refer to the same embodiment, nor is it an independent or alternative embodiment mutually exclusive with other embodiments.

In the description of the present application, it should be noted that, unless otherwise clearly specified and limited, the terms "mount", "connecting" and "connection" and "attach" should be understood in a broad sense, for example, it can be a fixed connection, a detachable connection, or an integral connection, it can be connected directly, it can be connected indirectly through an intermedium, or it can be a communication between two elements at insides thereof. For those of ordinary skill in the art, the specific meaning of the above-mentioned terms in the present application can be understood according to specific situations.

The term "and/or" in the present application is merely an association relationship describing associated objects, which means that there can be three types of relationships. For example, "A and/or B" can mean three cases that there is only A, there are A and B at the same time, and there is only B. In addition, the punctuation mark "/" in the present application generally indicates that the related objects of the preceding content and following content are in an "or" relationship.

In the embodiments of the present application, the same reference numerals denote the same components, and for the sake of brevity, in different embodiments, detailed descriptions of the same components are omitted. It should be understood that the thickness, length, width and other dimensions of the various components in the embodiments of the present application shown in the drawings, as well as the overall thickness, length and width, etc., of the integrated device are only exemplary descriptions, and should not constitute any limitation to the present application.

The "plurality" in the present application refers to two or more (including two).

In the present application, a battery cell may include a lithium ion secondary battery cell, a lithium ion primary battery cell, a lithium sulfur battery cell, a sodium lithium ion battery cell, a sodium ion battery cell or a magnesium ion battery cell, etc., which is not limited in the embodiment of the present application. The battery cell can be in a shape of cylinder, flat shape, rectangular, or other shapes, which is not limited in the embodiments of the present application.

The battery cell includes an electrode assembly and an electrolyte, and the electrode assembly includes a positive electrode sheet, a negative electrode sheet and a separator. The battery cell mainly relies on the movement of metal ions between the positive electrode sheet and the negative electrode sheet to work. The positive electrode sheet includes a positive electrode current collector and a positive electrode active material layer. The positive electrode active material layer coats on a surface of the positive electrode current collector. The positive electrode current collector includes a positive electrode current collecting portion and a positive electrode tab protruding from the positive electrode current collecting portion. The positive electrode current collecting portion is coated with the positive electrode active material layer, and at least part of the positive electrode tab is not coated with the positive electrode active material layer. Taking a lithium ion battery as an example, a material of the positive electrode current collector may be aluminum, the positive electrode active material layer includes a positive electrode active material, and the positive electrode active material may be lithium cobaltate, lithium iron phosphate, ternary lithium, lithium manganite or the like. The negative electrode sheet includes a negative electrode current collector and a negative electrode active material layer. The negative electrode active material layer coats on a surface of the negative electrode current collector. The negative electrode current collector includes a negative electrode current collecting portion and a negative electrode tab protruding from the negative electrode current collecting portion. The negative electrode current collecting portion is coated with the negative electrode active material layer, and at least part of the negative electrode tab is not coated with the negative electrode active material layer. A material of the negative electrode current collector may be copper, the negative electrode active material layer includes the negative electrode active material, and the negative electrode active material may be carbon, silicon or the like. A material of the separator may be PP (polypropylene) or PE (polyethylene), etc. In addition, the electrode assembly may be a winding-type structure or a laminated-type structure, which is not limited in the embodiments of the present application.

The battery cell further includes a housing, and an accommodating chamber for accommodating the electrode assembly is formed at an inside of the housing. The housing can protect the electrode assembly from the outside, so as to prevent external foreign matter from affecting the charging or discharging of the electrode assembly.

The battery cell can be stored in a casing body to form a battery pack, and the electric power of the battery cell can be transmitted to external electrical device through a circuit. Typically, the casing body has a carrying plate. One side of the carrying plate can be connected to external portions, and the other side can be connected to the battery cell. The more battery cells that the carrying plate can carry, the greater the capacity of the battery pack.

According to researching, the inventor found that as the required capacity of the battery increases, the carrying strength of a local region on the carrying plate may be insufficient, so that it may lead to the deformation or even breakage in the local region, and reduce the safety of the battery.

In view of this, the embodiments of the present application provide a technical solution. In the technical solution, the casing body of the battery includes an edge frame and a carrying plate, and the edge frame encloses to form a first opening. The carrying plate can be used to connect the battery cell. The carrying plate covers the first opening. The carrying plate includes at least one reinforcing region and at least one carrying region. A thickness of the reinforcing region may be larger than a thickness of the carrying region. In the technical solution, the reinforcing plate can be provided, and the thickness of the reinforcing region on the carrying plate increase, so that the carrying capacity of the carrying plate can be improved, and the local stiffness of the carrying plate can be improved. Therefore, the overall rigidity of the casing body can be improved, and the safety performance of the battery can be improved.

The technical solution described in the embodiments of the present application is applicable to the battery and an electricity-consuming apparatus using the battery.

The electric device may be a vehicle, a mobile phone, a portable device, a notebook computer, a ship, a spacecraft, an electric toy, an electric tool or the like. The vehicle may be a fuel car, a gas car or a new energy car, and the new energy car can be a pure electric car, a hybrid car, a range-extended car or the like; the spacecraft may include an airplane, a rocket, a space shuttle, a space ship or the like; the electric toy may include a fixed-type or mobile-type electric toy, such as a game player, an electric car toy, an electric ship toy, an electric airplane toy or the like; the power tool may include a metal cutting power tool, a grinding power tool, an assembly power tool and a railway power tools, such as an electric drill, an electric grinder, an electric wrench, an electric screwdriver, an electric hammer, an impact drill, a concrete vibrator, an electric planers or the like. The embodiments of the present application do not impose special limitation on the above-mentioned electric devices.

For convenience of description, the following embodiments take the vehicle selected from the electricity-consuming apparatus as an example for description.

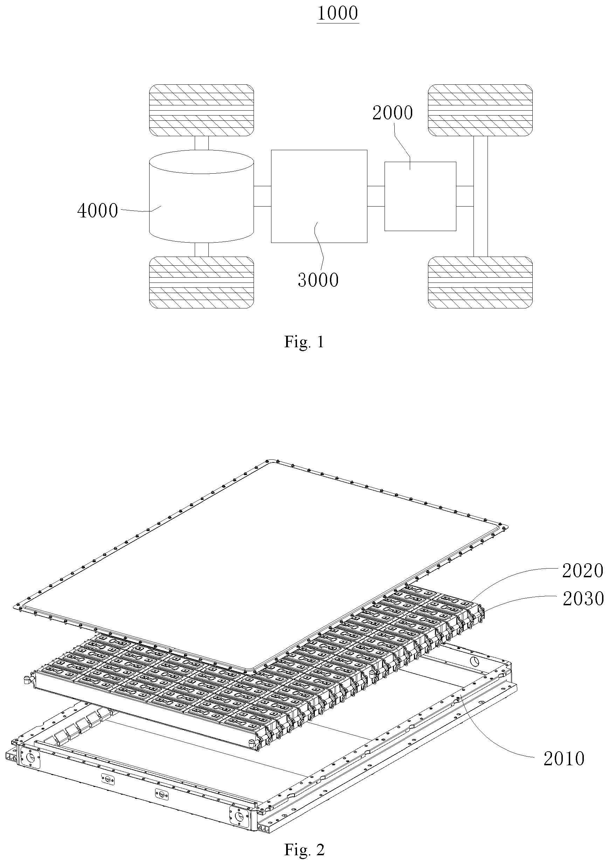

Fig. 1 shows a structural schematic view of the vehicle according to some embodiments of the present application.

As shown in Fig. 1, a battery 2000 can be arranged at an inside of the vehicle 1000, and the battery 2000 may be arranged at a bottom, a front portion or a back portion of the vehicle 1000. The battery 2000 can be configured to supply power to the vehicle 1000, for example, the battery 2000 can be used as an operating power source of the vehicle 1000.

The vehicle 1000 may further include a controller 3000 and a motor 4000. The controller 3000 is configured to control the battery 2000 to supply power to the motor 4000, for example, the controller 3000 can be configured to satisfy the working power requirements during starting, navigating and driving of the vehicle 1000.

In some embodiments of the present application, the battery 2000 can not only be used as an operating power source for the vehicle 1000, but can also be used as a driving power source for the vehicle 1000, replacing or partially replacing the fuel or the natural gas to provide driving power for the vehicle 1000.

Fig. 2 shows an exploded schematic view of the battery according to some embodiments of the present application.

As shown in Fig. 2, the battery 2000 may include a casing body 2010 and a battery cell 2020, and the battery cell can be accommodated in the casing body 2010.

In the battery 2000, one or a plurality of battery cells 2020 may be provided. If there are the plurality of battery cells 2020, the plurality of battery cells 2020 can be connected in series, in parallel or in mixed. The mixed connection means that the plurality of battery cells 2020 may include the connection in series and the connection in parallel. The plurality of battery cells 2020 may be directly connected in series, in parallel or in combination together, and then all the battery cells 2020 are accommodated in the casing body 2010 as a whole. It is also possible that all the battery cells 2020 may be connected in series, in parallel or in mixed to form the battery module (not shown in drawings) firstly, and then the plurality of battery modules are connected in series, in parallel or in mixed to form a whole, and accommodated in the casing body 2010.

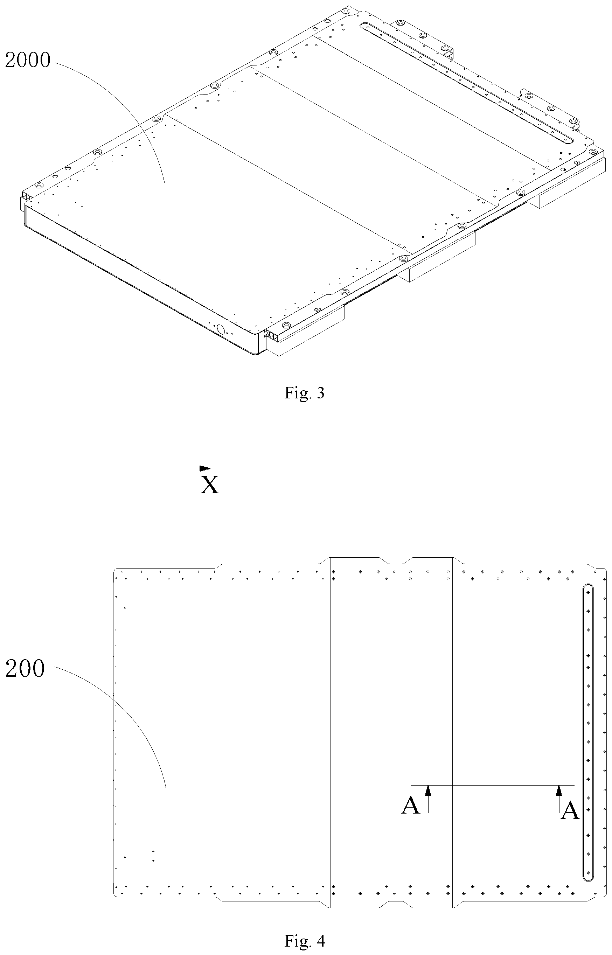

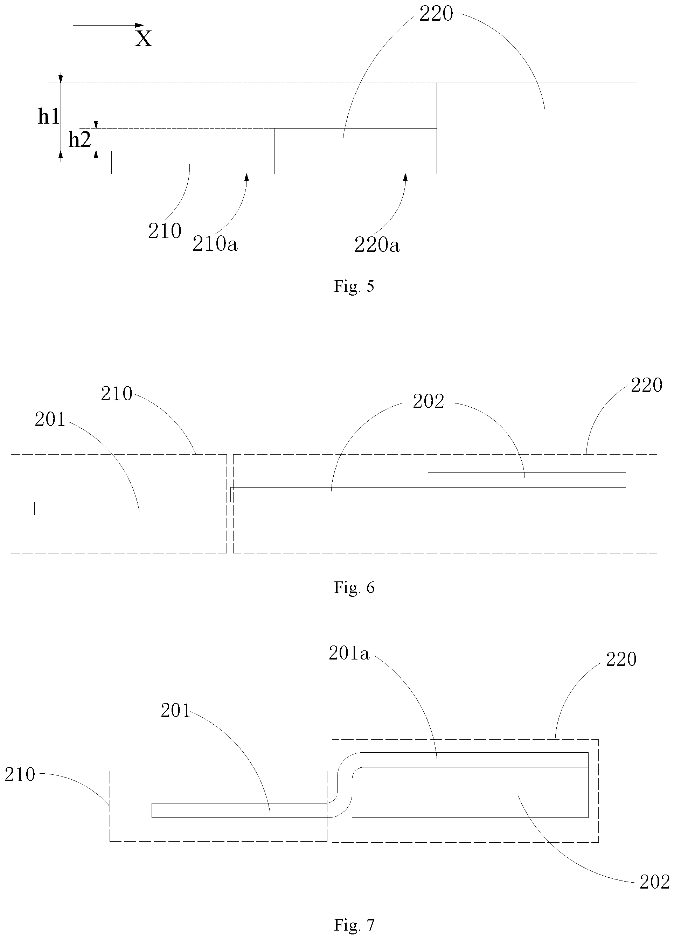

Fig. 3 shows a structural schematic view of the casing body of the battery cell according to some embodiments of the present application; Fig. 4 shows a structural schematic view of the carrying plate in the casing body of the battery cell according to some embodiments of the present application; Fig. 5 shows a structural schematic cross-sectional view of at a line A-A in Fig. 4.

As shown in Fig. 2 to Fig. 5, the casing body 2010 of the battery 2000 provided by embodiments of the present application includes an edge frame 100 and a carrying plate 200. The edge frame 100 may enclose and form a first opening. The carrying plate 200 can be configured to connect the battery cell 2020. The carrying plate 200 may cover the first opening, the carrying plate 200 may include at least one carrying region 220 and at least one reinforcing region 210, and a thickness of the reinforcing region 220 may be larger than a thickness of the carrying region 210.

The edge frame 100 may enclose and form a frame of the casing body 2010, so that it can be used to restrict the storage quantity and the energy of the battery cell 2020. The edge frame 100 can be made of various materials, such as the copper, the iron, the aluminum, the steel, the aluminum alloy and the like. The frame formed by the edge frame 100 has a bottom portion and a top portion opposite to each other.

The carrying plate 200 covers the first opening. The frame formed by the carrying plate 200 and the edge frame 100 may enclose and form the accommodating chamber for accommodating the battery cell 2020. A side of the carrying plate 200 facing the accommodating chamber can be connected with the battery cell 2020. In some examples of the embodiment, the battery cell 2020 in the casing body 2010 of the battery can be located below the carrying plate 200.

Both a side of the reinforcing region 220 and a side of the carrying region 210 facing the accommodating cavity can support the battery cell 2020. In the carrying plate 200, the thickness of the reinforcing region 220 is larger than the thickness of the carrying region 210. Correspondingly, the carrying performance of the reinforcing region 220 may be stronger than that of the carrying region 210, so that the carrying capacity of the battery cell 2020 can be better. In some examples of the embodiment, the thicknesses of the reinforcing regions 220 may be the same. In some other examples of the embodiment, the thicknesses of the reinforcing regions 220 may be different. In some other examples of the embodiment, the thicknesses of the reinforcing regions 220 may be different.

In the embodiments of the present application, the reinforcing region 220 can be arranged on the carrying plate 200 to increase the thickness of the reinforcing region 220 on the carrying plate 200, so that it can improve the carrying capacity of the carrying plate 200, and improve the local rigidity of the carrying plate 200. Therefore, the overall rigidity of the casing body 2010 can be improved, and the safety performance of the battery can be improved.

In some embodiments, a plurality of reinforcing regions 220 and a plurality of carrying regions 210 are provided, the plurality of reinforcing regions 220 and carrying regions 210 are alternately distributed in a first direction X, and the first direction intersects with a thickness direction of the carrying plate.

The alternating distribution of the reinforcing regions 220 and the carrying regions 210 can be in various distribution situations. In some embodiments, the alternating distribution of the reinforcing regions 220 and the carrying regions 210 may be that the reinforcing region 220, the carrying region 210, the reinforcing region 220 and the carrying region 210 are alternately distributed in sequence. In some other embodiments, the alternating distribution of the reinforcing region 220 and the carrying region 210 may be that the reinforcing region 220, the reinforcing region 220, the carrying region 210, the reinforcing region 220 and the reinforcing region 220 are distributed alternately in sequence. In some other embodiments, the alternate distribution of the reinforcing region 220 and the carrying region 210 may be that, based on the carrying requirements of the casing body 2010, the reinforcing region 220 can be arranged in a weak carrying region, and the carrying region 210 can be arranged in a region with a sufficient carrying strength.

The widths of all the carrying regions 210 in the carrying plate 200 in the first direction X may be the same, or one part of the carrying regions 210 may have the same width in the first direction X, and the widths of the other part of the carrying regions 210 in the first direction X may be different. Further, the widths of the other part of the carrying region 210 in the first direction X may be different from one another, or the widths of the other part of the carrying regions 210 in the first direction X may be the same. Likewise, the widths of all the reinforcing regions 220 in the carrying plate 200 in the first direction X may be the same as the widths of the carrying regions 210 in the first direction X, or may be different from the widths of the carrying regions 210 in the first direction X. One part of the reinforcing regions 220 in the carrying plate 200 may have the same width in the first direction X, and the other part of the reinforcing regions 220 may have different widths in the first direction X. Further, the widths of the other part of the reinforcing regions 220 in the first direction X may be different from one another, or the widths of the other part of the reinforcing regions 220 in the first direction X may be the same.

In the embodiments, the carrying region 210 and the reinforcing region 220 can strengthen a weak region in the casing body 2010 during design in a targeted manner, so that arrangements of the reinforcing region 220 and the carrying region 210 can be more flexible.

In some embodiments, at least two of the plurality of reinforcing regions 220 have different widths extending in the first direction X.

In the embodiments, when each of the reinforcing regions 220 is arranged, the reinforcing region 220 can be arranged according to the different degrees of the weak region in the casing body 2010 in a targeted manner.

In some embodiments, a plurality of reinforcing regions 220 and a plurality of carrying regions 210 can be provided, and an average thickness H1 of the plurality of reinforcing regions 220 and an average thickness H2 of the plurality of carrying regions 210 satisfy a relationship: 0 mm<H1-H2≤20 mm.

In the embodiments of the present application, the average thickness of all the carrying regions 210 in the carrying plate 200 can be the same as the thickness of each of the carrying regions 210, thereby reducing the manufacturing size and reducing the manufacturing cost of the carrying regions 210.

Exemplarily, the values of H1-H2 may be 0.1 mm, 0.5 mm, 1 mm, 2 mm, 3 mm, 5 mm, 10 mm, 15 mm or 20 mm.

The greater the difference between the average thickness of the reinforcing regions 220 and the average thickness of the carrying regions 210, the greater the overall weight of the reinforcing regions 220, and the higher the material cost. The less the difference between the average thickness of the reinforcing regions 220 and the average thickness of the carrying regions 210, the smaller the overall rigidity of the casing body 2010 increases, and the smaller the carrying capacity of the carrying plate 200 increases. In the embodiments, the average thickness of the reinforcing regions 220 and the average thickness of the carrying regions 210 can be limited to 0 mm<H1-H2≤20 mm, so that an average thickness difference between the two regions should be reduced as much as possible under the premise of ensuring the rigidity of the casing body 2010.

In some embodiments, a minimum thickness H3 of the carrying regions 210 satisfies a relationship: 0.2 mm≤H3≤20 mm. Optionally, 0.5 mm≤H3≤10 mm. Exemplarily, the minimum thickness of carrying regions 210 may be 0.2 mm, 0.3 mm, 0.5 mm, 1 mm, 2 mm, 5 mm, 10 mm, 15 mm, or 19 mm.

The carrying region 210 may represent the fundamental carrying/bearing capacity of the carrying plate 200. The smaller the thickness of the carrying region 210, the worse the carrying capacity of the carrying plate 200, and the lower the overall rigidity of the casing body 2010. The larger the thickness of the carrying region 210, the higher the material cost of the carrying plate 200, and the heavier the overall weight of the casing body 2010. In the embodiments, the thickness of the carrying region 210 can be limited to 0.2 mm≤H3≤20 mm, so as to balance the carrying capacity and material cost of the carrying plate 200.

In some embodiments, an average thickness of the carrying plate 200 is H, a weight of a battery core is M, and H and M satisfy a relationship: 0.002 mm/kg≤H/M≤100 mm/kg. Optionally, 0.01 mm/kg≤H/M≤0.5 mm/kg.

When the value of H/M is too large, it will cause waste of weight and low energy density; when the value of H/M is too small, the structural strength cannot be satisfied, and the safety accident such as fire, explosion and the like will occur. In the embodiment, the relationship between the average thickness of the carrying plate 210 and the weight of the battery core can be limited to 0.002 mm/kg≤H/M≤100 mm/kg, so as to balance the structural strength requirement of the carrying plate 200 and the energy density requirement of the battery core.

In some embodiments, a thickness difference between the carrying region 210 and the reinforcing region 220 with a maximum thickness is h1, and h1 may satisfy a relationship: 0 mm<h1≤100 mm; a thickness difference between the carrying region 210 and the reinforcing region 220 with a minimum thickness is h2, and h2 may satisfy a relationship: 0 mm<h2≤10 mm. Exemplarily, the value of h1 may be 1 mm, 2 mm, 5 mm, 10 mm, 15 mm, 20 mm, 30 mm, 50 mm or 100 mm. The value of h2 may be 0.1 mm, 0.2 mm, 0.5 mm, 1 mm, 1.5 mm, 2 mm, 3 mm, 5 mm or 10 mm.

The reinforcing region 220 may protrude toward a side facing away from the battery cell 2010. The larger the thickness difference between the reinforcing region 220 and the carrying region 210, the more space the reinforcing region 220 occupies at the side facing away from the battery cell 2010, so that it is not conducive to the assembly of other portions. The smaller the thickness difference between the reinforcing region 220 and the carrying region 210 is, the closer the carrying performance of the reinforcing region 220 and the carrying region 210 is. If the thickness difference between the reinforcing region 220 and the carrying region 210 is too small, the carrying performance of the reinforcing region 220 may be similar to that of the carrying region 210, and the reinforcing effect cannot be reflected. In the embodiments, the maximum thickness difference can be limited to 0 mm<h1 ≤ 100 mm, and the minimum thickness difference can be limited to 0 mm<h2≤10 mm, so as to balance the space occupied by the carrying plate 200 and the carrying performance.

In some embodiments, the reinforcing region 220 and the carrying region 210 are arranged to be fixedly connected with each other. Optionally, the reinforcing region 220 and the carrying region 210 can be welded to each other. In some other embodiments, the reinforcing region 220 and the carrying region 210 can be fixedly connected by bolts, adhesives and the like. Therefore, after the carrying plate 200 carries the battery cell 2020, the reinforcing region 220 and the carrying region 210 are not separated, so as to reduce the possibility of sealing failure of the casing body 2010.

In some embodiments, the reinforcing region 220 and the carrying region 210 are an integrally formed structure.

In the embodiment, the reinforcing region 220 and the carrying region 210 can be integrally formed through the processes such as casting, 3D printing and the like to reduce the production cost of the carrying plate 200, so as to facilitate the large-scale production of the carrying plate 200.

Fig. 6 shows a structural schematic cross-sectional view of another carrying plate 200 in the casing body of the battery cell according to some embodiments of the present application; and Fig. 7 shows a structural schematic cross-sectional view of another carrying plate 200 in the casing body of the battery cell according to some embodiments of the present application.

Referring to Fig. 6 and Fig. 7 together, in some embodiments, the carrying plate 200 may include a substrate 201 and a laminating plate 202, the laminating plate 202 can be arranged to be stacked in different regions at a side of the substrate 201 away from the battery cell 2020 to form the reinforcing region 220, and a region of the substrate 201 not covered by the laminating plate 202 forms the carrying region 210.

The substrate 201 can serve as the fundamental carrying/bearing capacity region 210 in the carrying plate 200. The weak carrying region will appear on the carrying plate 200. The laminating plate 202 can be arranged at a side of the substrate 201 corresponding to the weak carrying region away from the battery cell 2020, in order to enhance the carrying performance of this region.

The laminating plate 202 may have different thicknesses and widths. The laminating plate 202 can also have the same thickness and width, so that it can accurately improve the carrying capacity of the laminating plate 202 required for the weak carrying region. In the embodiments, the carrying plate 200 can be divided into the substrate 201 and the laminating plate 202, so that it can reduce the manufacturing process; the laminating plate 202 can be adapted to different carrying strengths, so as to reduce the need for the non-standard portions and further reduce the manufacturing cost.

In some embodiments, the substrate 201 may include at least one concave portion 210a, and the laminating plate 202 may be embedded in the concave portion 210a to form the reinforcing region 220.

In the embodiments, the concave portion 201a in the substrate 201 can be recessed in a direction away from the battery cell 2020. The gap between the concave portion 201a and the battery cell 2020 may be provided with the laminating plate 202. The concave portion 201a can be fixedly connected to the laminating plate 202 by means of welding, bolts, pasting or the like, so as to improve the adaptability of the carrying plate 200 and a peripheral portion at an outside of the casing body 2020. At the same time, the integrated outer surface can reduce the possibility of sealing failure caused by an external impact force on the carrying plate 200, and improve the reliability of the casing body 2010 of the battery.

In some embodiments, materials of the substrate 201 and the laminating plate 202 may be different, a rigidity of the laminating plate 202 may be greater than a rigidity of the substrate 201, and a weight of the laminating plate 202 per unit area may be smaller than a weight of the substrate 201 per unit area.

In the embodiments, the laminating plate 202 can be produced by the material with high stiffness and low weight, so that the weight of the reinforcing region 220 can be reduced, can the overall weight of the carrying plate 200 can be reduced.

In some embodiments, the materials of the substrate 201 and the laminating plate 202 may include the steel, the carbon steel and the aluminum alloy.

In the embodiments, all the steel, the carbon steel and the aluminum alloy have the good stiffness and the light weight.

Referring to Fig. 6, in some embodiments, a first surface 210a of the carrying region 210 facing the battery cell 2020 and a second surface 220a of the reinforcing region 220 facing the battery cell 2020 can be on the same plane.

In the embodiments, the first surface 210a and the second surface 220a can be placed on the same plane, so as to avoid the uneven phenomenon when the battery cell 2020 is mounted on the carrying plate 200, and avoid the phenomenon that the battery cell 2020 is subjected to the uneven force to cause the explosion of the battery cell 2020.

In some embodiments, the casing body 2010 of the battery may further include a sealing member. The sealing member can be arranged between the carrying plate 200 and the casing body 2010, and each of edge portions of each of the reinforcing region 220 and the carrying region 210 in a second direction can be abutted against the sealing member and connected to the casing body 2010.

The material of the sealing member may include the rubber, the silicone, the nylon, the engineering plastics and the like.

In the embodiments, the sealing member can seal between the carrying plate 200 and the casing body 2010, so that it can prevent the foreign matter, the water vapor and the like from entering between the carrying plate 200 and the casing body 2010, and improve the service life of the battery cell 2020.

In some embodiments, the embodiments of the present application further provide the battery 2000, including the battery cell 2020 and the casing body 2010 according to any one of embodiments as described above. The casing body 2010 can be configured to accommodate the battery cell 2020.

In some embodiments, the battery cell 2020 can be bonded to the carrying plate 200 to ensure that the battery cell 2020 do not move in the casing body 2010.

In some embodiments, the battery 2000 may further include a heat-managing portion 2030. The heat-managing portion 2030 may be configured to adjust a temperature of the battery cell 2020. An orthographic projection of a part of the heat-managing portion 2030 on the carrying plate 200 at least partially may overlap with the reinforcing region 220 in a thickness direction.

In some embodiments, the embodiments of the present application further provide an electricity-consuming apparatus, including the battery 2000 according to any one of embodiments in the second aspect. The battery may be configured to provide electrical power.

In some embodiments, referring to Fig. 2 to Fig. 5, the present application provides the casing body 2010 of the battery. The casing body 2010 of the battery may include the edge frame 100 and the carrying plate 200. The edge frame 100 may enclose and form the first opening. The carrying plate 200 can be used to connect the battery cell 2020. The carrying plate 200 may cover the first opening. The carrying plate 200 may include at least one reinforcing region 220 and at least one carrying region 210. The thickness of the reinforcing region 220 may be larger than the thickness of the carrying region 210. The plurality of reinforcing regions 220 and the plurality of carrying regions 210 may be alternately distributed in the first direction X. The minimum thickness H3 of the carrying region 210 can satisfy the relationship: 0.2 mm≤H3≤20 mm. Optionally, 0.5 mm≤H3≤10 mm. The average thickness of the carrying plate is H, the weight of the battery is M, and H and M satisfy a relationship: 0.002 mm/kg≤H/M≤ 100 mm/kg. Optionally, 0.01 mm/kg≤ H/M≤0.5 mm/kg. The reinforcing region 220 and the carrying region 210 are arranged to be fixedly connected with each other. The first surface 210a of the carrying region 210 facing the battery cell 2020 and the second surface 220a of the reinforcing region 220 facing the battery cell 2020 are on the same plane.

It should be noted that, in the case of no conflict, the embodiments in the present application and the features in the embodiments can be combined with one another.

Finally, it should be noted that the above embodiments are merely used to illustrate the technical solutions of the present application, and are not intended to restrict the present application. Although the present application has been described in detail with reference to the aforementioned embodiments, ordinary technical personnel in this field should understand that: the technical solutions recorded in the aforementioned embodiments can still be modified, or some of the technical features can be equivalently replaced. However, these modifications or substitutions do not separate the essence of the corresponding technical solutions from the gist and scope of the technical solutions of the various embodiments of this application.

## Claims

1. A casing body of a battery, comprising:
an edge frame, enclosing and forming a first opening; and
a carrying plate, configured to connect a battery cell, wherein the carrying plate covers the first opening, the carrying plate comprises at least one carrying region and at least one reinforcing region, and a thickness of the reinforcing region is larger than a thickness of the carrying region.

2. The casing body according to claim 1, wherein a plurality of reinforcing regions and a plurality of carrying regions are provided, the plurality of reinforcing regions and the plurality of carrying regions are alternately distributed in a first direction, and the first direction intersects with a thickness direction of the carrying plate.

3. The casing body according to claim 2, wherein at least two of the plurality of reinforcing regions have different widths extending in the first direction.

4. The casing body according to claim 1, wherein a plurality of reinforcing regions and a plurality of carrying regions are provided, and an average thickness H1 of the plurality of reinforcing regions and an average thickness H2 of the plurality of carrying regions satisfy a relationship: 0 mm<H1-H2≤20 mm.

5. The casing body according to any one of claims 1-4, wherein a minimum thickness H3 of the carrying region satisfies a relationship: 0.2 mm≤H3≤20 mm.

6. The casing body according to claim 5, wherein the minimum thickness H3 of the carrying region satisfies a relationship: 0.5 mm≤H3 ≤ 10 mm.

7. The casing body according to any one of claims 1-6, wherein an average thickness of the carrying plate is H, a weight of the battery is M, and H and M satisfy a relationship: 0.002 mm/kg≤H/M≤100 mm/kg.

8. The casing body according to claim 7, wherein the average thickness of the carrying plate is H, and the weight of the battery is M, and H and M satisfy a relationship: 0.01 mm/kg ≤H/M≤0.5 mm/kg.

9. The casing body according to any one of claims 1-8, wherein a thickness difference between the carrying region and the reinforcing region with a maximum thickness is h1, and h1 satisfies a relationship: 0 mm<h1 ≤ 100 mm; a thickness difference between the carrying region and the reinforcing region with a minimum thickness is h2, and h2 satisfies a relationship: 0 mm<h2≤10 mm.

10. The casing body according to claim 1, wherein the reinforcing region and the carrying region are arranged to be fixedly connected with each other.

11. The casing body according to claim 1, wherein the reinforcing region and the carrying region are an integrally formed structure.

12. The casing body according to any one of claims 1-9, wherein the carrying plate comprises a substrate and a laminating plate, the laminating plate is arranged to be stacked in different regions at a side of the substrate away from the battery cell to form the reinforcing region, and a region of the substrate not covered by the laminating plate forms the carrying region.

13. The casing body according to claim 12, wherein the substrate comprises at least one concave portion, and the laminating plate is embedded in the concave portion to form the reinforcing region.

14. The casing body according to claim 12, wherein a material of the substrate is different from that of the laminating plate, a rigidity of the laminating plate is greater than a rigidity of the substrate, and a weight of the laminating plate per unit area is smaller than a weight of the substrate per unit area.

15. The casing body according to any one of claims 1-14, wherein a first surface of the carrying region facing the battery cell and a second surface of the reinforcing region facing the battery cell are on the same plane.

16. The casing body according to any one of claims 1-15, further comprising a sealing member, wherein the sealing member is arranged between the carrying plate and the casing body, and each of edge portions of each of the reinforcing region and the carrying region in a second direction is abutted against the sealing member and connected to the casing body.

17. A battery, comprising:
a battery cell; and
the casing body according to any one of claims 1-16, wherein the casing body is configured to accommodate the battery cell.

18. The battery according to claim 17, wherein further comprising a heat-managing portion, wherein the heat-managing portion is configured to adjust a temperature of the battery cell;
an orthographic projection of a part of the heat-managing portion on the carrying plate at least partially overlaps with the reinforcing region in a thickness direction.

19. An electricity-consuming apparatus, comprising the battery according to any one of claims 17-18, wherein the battery is configured to provide an electrical power.
